# EUROPEAN PATENT APPLICATION

(11) **EP 4 443 638 A1**
(43) Date of publication of application: **09.10.2024**
(21) Application number: 22901247.1
(22) Date of filing: 28.11.2022
(51) Int. Cl.: H01M 50/586, H01G 11/06, H01G 11/52, H01G 11/70, H01G 11/84, H01M 4/66, H01M 10/04, H01M 10/0525, H01M 10/058, H01M 10/0585, H01M 10/0587, H01M 50/449, H01M 50/451, H01M 50/457, H01M 50/46, H01M 50/463, H01M 50/533, H01M 50/536, H01M 50/54, H01M 50/59, H01M 50/593

(54) **POWER STORAGE DEVICE AND METHOD FOR MANUFACTURING POWER STORAGE DEVICE**

(30) Priority: 30.11.2021 JP 2021194849; 30.11.2021 JP 2021194857; 30.11.2021 JP 2021194859
(71) Applicant: Panasonic Intellectual Property Management Co., Ltd., Kadoma-shi, Osaka 571-0057 (JP)
(72) Inventor: SAKAMOTO, Shinichi, Kadoma-shi, Osaka 571-0057 (JP); KOZUKI, Kiyomi, Kadoma-shi, Osaka 571-0057 (JP); GESHI, Shinya, Kadoma-shi, Osaka 571-0057 (JP)
(74) Representative: Eisenführ Speiser
(86) International application number: PCT/JP2022/043799
(87) International publication number: WO 2023/100815

(57) **Abstract**

Disclosed is a power storage device (200) including an electrode group including a positive electrode (10), a negative electrode (20), and a separator (30). The positive electrode (10), the negative electrode (20), and the separator 30 of the electrode group are stacked (in a stacking direction), with the separator (30) disposed between the positive electrode (10) and the negative electrode (20). The positive electrode (10) includes a positive electrode current collector, and a positive electrode active material layer disposed on the positive electrode current collector. The negative electrode (20) includes a negative electrode current collector, and a negative electrode active material layer disposed on the negative electrode current collector. The separator (30) includes a protruding part (30x) protruding, in a direction perpendicular to the stacking direction, from a region in which the positive electrode active material layer and the negative electrode active material layer are opposed each other. At least a portion of the protruding part (30x) includes, at an end portion of the protruding part (30x), a curled part (30xa) that is curled.

## Description

### [Technical Field]

The present disclosure relates to a power storage device and a manufacturing method of a power storage device.

### [Background Art]

A secondary battery serving as a power storage device includes a positive electrode, a negative electrode, and a separator. Conventionally, various proposals have been made regarding the arrangement of these components.

Patent Literature 1 (Japanese Laid-Open Patent Publication No. 2017-59326) discloses "A secondary battery comprising a wound group including: a positive electrode in which positive electrode mixture layers are provided on both surfaces of a positive electrode metal foil having longer sides and shorter sides, and a positive-electrode-metal-foil-exposed part is formed along one of the longer sides of the positive electrode metal foil; a negative electrode in which negative electrode mixture layers are provided on both surfaces of a negative electrode metal foil having longer sides and shorter sides, and a negative-electrode-meta-foil-exposed part is formed along one of the longer sides of the negative electrode metal foil; and a separator, wherein the positive electrode and the negative electrode are wound in a longer side direction with the separator interposed therebetween, while the positive-electrode-metal-foil-exposed part and the negative-electrode-meta-foil-exposed part are disposed on one side and another side, respectively, in a winding axis direction, and the separator is folded back so as to be opposed to an end face of the negative electrode metal foil, to form a folded-back part, and the folded-back part is provided outward of the positive electrode mixture layer in the winding axis direction".

Patent Literature 2 (Japanese Laid-Open Patent Publication No. 2016-039041) discloses "A power storage element comprising an electrode assembly formed by stacking electrodes and a separator, wherein the electrodes each include a formation part on which an active material layer is formed, and a non-formation part that is adjacent to the formation part and on which the active material layer is not formed, the electrode assembly is composed of an electrode body part in which the plurality of formation parts and the separator are stacked, and a stacked part that is disposed at an end of the electrode assembly and in which the plurality of non-formation parts are stacked, the stacked part includes one or more bundled parts formed by overlaying end portions of adjacent ones of the non-formation parts with each other, the plurality of non-formation parts have a constant width, and a direction of arrangement of boundaries between the formation parts and the non-formation parts respectively adjacent to the formation parts is inclined relative to a stacking direction of the electrodes and the separator".

### [Citation List]

### [Patent Literatures]

Patent Literature 1: Japanese Laid-Open Patent Publication No. 2017-59326
Patent Literature 2: Japanese Laid-Open Patent Publication No. 2016-039041

### [Summary of Invention]

### [Technical Problem]

When metal fine particles are attached to an active material layer (e.g., a positive electrode active material layer) of one electrode of a power storage device such as a lithium ion secondary battery, the metal particles may, after dissolution, be deposited in a dendritic form on an active material layer of the other electrode. As a result, a micro-short circuit may occur between the positive electrode and the negative electrode, possibly causing degradation of properties, such as a voltage drop, and a reduction in the yield during manufacture.

A so-called end face current collecting structure has been studied as a current collecting structure for obtaining high output. In general, the end face current collecting structure refers to a structure in which an exposed part of a current collector is caused to protrude from an end face of a stack (e.g., wound body) of electrodes, and the exposed part is welded to a current collector plate. In the end face current collecting structure, spatters (metal fine particles) may be scattered during welding. For this reason, it is important to prevent spatters from being attached to the active material layers and the like.

Under such circumstances, an object of the present disclosure is to provide a power storage device that can suppress degradation of properties caused by metal fine particles and the like.

### [Solution to Problem]

An aspect of the present disclosure relates to a power storage device. The power storage device is a a power storage device, including an electrode group including a positive electrode, a negative electrode, and a separator, wherein the positive electrode, the negative electrode, and the separator of the electrode group are stacked in a stacking direction, with the separator disposed between the positive electrode and the negative electrode, the positive electrode includes a positive electrode current collector, and a positive electrode active material layer disposed on the positive electrode current collector, the negative electrode includes a negative electrode current collector, and a negative electrode active material layer disposed on the negative electrode current collector, the separator includes a protruding part protruding from a region in which the positive electrode active material layer and the negative electrode active material layer are opposed to each other, and at least a portion of the protruding part is bent.

### [Advantageous Effects of Invention]

According to the present disclosure, it is possible to obtain a power storage device that can suppress degradation of properties caused by metal fine particles and the like.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A cross-sectional view schematically showing a configuration of a battery according to Embodiment 1.
[FIG. 2] A cross-sectional view schematically showing a portion of FIG. 1.
[FIG. 3] A cross-sectional view schematically showing a step of a manufacturing method of the battery according to Embodiment 1.
[FIG. 4A] Atop view schematically showing an example of a separator.
[FIG. 4B] A view schematically showing a cross section taken along the line IVB-IVB in FIG. 4A.
[FIG. 5A] Atop view schematically showing an example of a manufacturing method of the separator.
[FIG. 5B] A view schematically showing a cross section taken along the line VB-VB in FIG. 5A.
[FIG. 6] A cross-sectional view schematically showing a configuration of a battery according to Embodiment 2.
[FIG. 7] A cross-sectional view schematically showing a portion of FIG. 6.
[FIG. 8] A cross-sectional view schematically showing a step of a manufacturing method of the battery according to Embodiment 2.

### [Description of Embodiments]

In the following, embodiments of the present disclosure will be described by way of examples. However, the present disclosure is not limited to the examples described below. Although examples of specific numerical values and materials may be given in the following description, other numerical values and materials may be used as long as the invention according to the present disclosure can be practiced. In the present specification, the expression "from a numerical value Ato a numerical value B" includes the numerical value A and the numerical value B, and can be read as "a numerical value A or more and a numerical value B or less". In the following description, when examples of the lower and upper limits of numerical values related to a specific physical property, condition, or the like are given, any one of the given examples of the lower limit and any one of the given examples of the upper limit can be freely combined unless the lower limit is greater than or equal to the upper limit.

### (Power storage device (D))

A power storage device according to the present embodiment may be hereinafter referred to as a "power storage device (D)". The power storage device (D) is a power storage device including an electrode group including a positive electrode, a negative electrode, and a separator. The positive electrode, the negative electrode, and the separator of the electrode group are stacked in a stacking direction, with the separator disposed between the positive electrode and the negative electrode. The positive electrode includes a positive electrode current collector, and a positive electrode active material layer disposed on the positive electrode current collector. The negative electrode includes a negative electrode current collector, and a negative electrode active material layer disposed on the negative electrode current collector. The separator includes a protruding part protruding from a region in which the positive electrode active material layer and the negative electrode active material layer are opposed to each other. At least a portion of the protruding part is bent.

As examples of the power storage device (D), first to third power storage devices will be described below. The first power storage device, the second power storage device, and the third power storage device may be hereinafter referred to as a "power storage device (D1a)", a "power storage device (D1b)", and a "power storage device (D2)", respectively. In addition, the first power storage device (D1a) and the second power storage device (D1b) may be collectively referred to as a "power storage device (D1)".

### (Power storage device (D1a))

The first power storage device (D1a) is a power storage device including an electrode group including a positive electrode, a negative electrode, and a separator. The positive electrode, the negative electrode, and the separator of the electrode group are stacked in a stacking direction, with the separator disposed between the positive electrode and the negative electrode. The positive electrode includes a positive electrode current collector, and a positive electrode active material layer disposed on the positive electrode current collector. The negative electrode includes a negative electrode current collector, and a negative electrode active material layer disposed on the negative electrode current collector. The separator includes a protruding part protruding from a region in which the positive electrode active material layer and the negative electrode active material layer are opposed to each other. The separator includes a positive-electrode-side surface located toward the positive electrode adjacent to the separator, and a negative-electrode-side surface located toward the negative electrode adj acent to the separator. The at least a portion of the protruding part includes, at an end portion of the protruding part, a curled part that is curled. The protruding part may protrude, toward a direction substantially perpendicular to the stacking direction, from a region in which the positive electrode active material layer and the negative electrode active material layer are opposed to each other.

In the power storage device (D1a), the curled part is present at an end portion of the protruding part of the separator. This curled part can suppress metal fine particles (spatters, etc.) from reaching the interior (e.g., the active material layers) of the electrode group.

When the end portion of the protruding part is curled around half a circumference, the curled part has a semi-circular cross section. When the end portion of the protruding part is curled around a circumference, the curled part has a circular cross section. At the curled part, the end portion of the protrusion is wound by preferably at least a half turn on the average, and may be wound by at least 0.75 turns (e.g., at least one turn) on the average. Note that the average number of turns can be determined by freely selecting 10 locations of the curled part, measuring the rotation angle of the end portion of the protruding part at each of the locations of the curled part, and arithmetically averaging the thus obtained 10 rotation angles. The number of turns of the end portion of the protruding part at each of the locations of the curled part can be determined by cutting the battery and observing a cross section thereof.

As stated above, when metal fine particles are attached to the interior of the electrode group, the metal fine particles may cause degradation of properties, such as a voltage drop, and a reduction in the yield during manufacture. For example, a case shall be considered in which a power storage device having an end face current collecting structure is manufactured using a copper foil as a current collector. In this case, spatters (copper fine particles) containing copper may be scattered when connecting the copper foil to a current collector plate by welding. When the scattered copper fine particles are attached to a positive electrode active material layer, the fine particles are ionized, for example, during charging and discharging, and are further deposited on a negative electrode active material layer. When the copper deposited on the negative electrode active material layer grows in a dendritic form, this dendritic copper may result in a micro-short circuit between a positive electrode and a negative electrode. The micro-short circuit may result in degradation of properties, such as a voltage (e.g., battery voltage) drop. The curled part of the power storage device (D1a) suppresses the metal fine particles from reaching the interior of the electrode group. Accordingly, the power storage device (D1a) can suppress degradation of properties of the power storage device. In addition, the power storage device (D1a) can increase the yield during manufacture.

Note that spatters generated during welding may be scattered during welding, but may remain in the vicinity of the welded portion during welding and move over time. The power storage device (D1a) can also suppress the spatters from moving to the interior of the electrode group over time.

The folded-back structure of the separator described in Patent Literature 1 is not formed by the separator alone. Accordingly, the folded-back structure of the separator described in Patent Literature 1 is affected by electrode expansion and contraction associated with charging and discharging. In contrast, the curled part of the power storage device (D1a) can be formed by the separator alone, because the curled part is formed at a position away from an electrode (one of the positive and negative electrodes that is located opposite to an electrode joined to the corresponding current collector plate) to which the protruding part of the separator is adjacent in a direction perpendicular to the stacking direction. That is, the curled part of the power storage device (D1a) can be formed independently of the shapes and configurations of the other members. Accordingly, the curled part of the power storage device (D1a) is less likely to be affected by electrode expansion and contraction associated with charging and discharging.

In the power storage device (D1a), the curled part may be formed at the entire end portion of the protruding part, or may be formed only at part of the end portion of the protruding part.

In the power storage device (D1a), the curled part may be curled toward the positive electrode adjacent to the protruding part. When metal fine particles are attached to the positive electrode active material layer, a micro-short circuit due to ionization and deposition of the metal fine particles is particularly likely to occur. Accordingly, in order to suppress attachment of metal fine particles to the positive electrode active material layer, it is preferable that, when the negative electrode is welded to a negative electrode current collector plate, the curled part at the protruding part on the negative electrode current collector plate side is curled toward the positive electrode adj acent to the protruding part. Note that the curled part may be curled toward the negative electrode adj acent to the protruding part. Alternatively, a portion of the curled part may be curled toward the positive electrode adjacent to the protruding part, and another portion of the curled part may be curled toward the negative electrode adjacent to the protruding part.

The power storage device (D1a) may further include a negative electrode current collector plate, and the negative electrode current collector may be welded to the negative electrode current collector plate. In this case, it is preferable that the separator includes, on the negative electrode current collector plate side, the protruding part including the curled part. With this configuration, spatters generated when welding the negative electrode current collector to the negative electrode current collector plate can be suppressed from reaching the interior of the electrode group. As will be described later, the curled part can be formed when welding the negative electrode current collector to the negative electrode current collector plate.

The power storage device (D1a) may further include a positive electrode current collector plate, and the positive electrode current collector may be welded to the positive electrode current collector plate. The separator may include, on the positive electrode current collector plate side, the protruding part including the curled part. In this case, the curled part on the positive electrode current collector plate side may be curled toward the negative electrode. The separator may include, on both the negative electrode current collector plate side and the positive electrode current collector plate side, the protruding part including the curled part. Also, the pair of curled parts may protrude from the respective protruding parts so as to approach each other in the stacking direction. This configuration can particularly suppress metal fine particles from reaching the interior of the electrode group. Note that one of the positive electrode and the negative electrode may collect current using a known structure other than the end face current collecting structure. For example, one of the positive electrode and the negative electrode may be connected to a band-shaped lead, and the lead may be connected to a case or a sealing plate. Note that in this specification, the positive electrode current collector plate side and the negative electrode current collector plate side may be respectively read as the opening side of a bottomed tubular case and the bottom side of the case. Note, however, that in the power storage device according to the present disclosure, the positive electrode may be electrically connected to the case, and the negative electrode may be electrically connected to the sealing plate.

In the power storage device (D1a), usually, the separator includes a first separator and a second separator disposed so as to sandwich the positive electrode therebetween. The curled part may be formed on both the first separator and the second separator. In that case, the curled part may include a first curled part formed on the first separator, and a second curled part of the second separator. The pair of curled parts may be curled so as to approach each other. Specifically, the pair of curled parts be curled so as to approach each other in the stacking direction. The first curled part and the second curled part may be located at different positions other in a direction perpendicular to the stacking direction. Furthermore, the first curled part and the second curled part may overlap each other, as viewed from the direction (e.g., the axial direction of a wound body) perpendicular to the stacking direction. This configuration provides a longer path that a foreign object must take to move to the positive electrode active material layer located in a space between the pair of protruding parts including the pair of curled parts. Accordingly, it is possible to further suppress a foreign object from being attached to the positive electrode active material layer. Alternatively, the curled part may be formed on only the first separator or the second separator.

In the electrode group of the power storage device (D1a), the positive electrode, the negative electrode, and the separator may be stacked by winding the positive electrode, the negative electrode, and the separator. That is, the electrode group may be a wound body. In this case, each of the positive electrode, the negative electrode, and the separator is band-shaped. In the wound body, the positive electrode, the negative electrode, and the separator are stacked in the radial direction of the wound body. In this case, the positive electrode and the negative electrode stacked with the separator interposed therebetween may be stacked while the positive electrode and the negative electrode are displaced from each other in a direction (axial direction) perpendicular to the stacking direction. With this configuration, respective ends of the positive electrode and the negative electrode in the width direction protrude from both ends of the electrode group in the direction perpendicular to the stacking direction, thus forming end faces. The wound body may be a columnar wound body or any other wound body.

When the electrode group of the power storage device (D1a) is a wound body, the negative electrode current collector may be disposed on the outermost circumference of wound body. With this configuration, when the case also serves as a negative electrode terminal, the negative electrode current collector on the outermost circumference and the inner surface of the case can come into contact with each other to form a current collection path. This configuration can be realized by disposing the negative electrode on the outermost circumference and not forming the negative electrode active material layer on at least a portion of the outermost circumference.

The electrode group of the power storage device (D1a) may be a stack obtained by stacking a plurality of flat plate-shaped positive electrodes, a plurality of flat plate-shaped negative electrodes, and sheet-shaped separators. Such a stack can be formed by stacking the positive electrodes, the negative electrodes, and the separators such that the positive electrodes and the negative electrodes are alternately disposed, and that the separators are disposed between the positive electrodes and the negative electrodes. In such a stacked electrode group, the plurality of positive electrodes and the plurality of negative electrodes may be disposed so as to be displaced from each other in the direction perpendicular to the stacking direction.

It is preferable that, at the curled part of the power storage device (D1a), the heat resistance of the positive-electrode-side surface and the heat resistance of the negative-electrode-side surface differ from each other. By setting the heat resistance of one of these surfaces to be higher than the heat resistance of the other, the protruding part can be curled toward the side where the heat resistance is lower. For example, the heat resistance of the negative-electrode-side surface of the curled part (protruding part) may be higher than the heat resistance of the positive-electrode-side surface thereof. With this configuration, the curled part (protruding part) can be curled toward the positive electrode to which the curled part is adjacent. By setting the heat resistance of the positive-electrode-side surface of the curled part (protruding part) to be higher than the heat resistance of the negative-electrode-side surface thereof, the curled part (protruding part) can be curled toward the negative electrode to which the curled part is adj acent. The heat resistance of each of the surfaces can be increased by forming a heat-resistant layer thereon.

In this specification, the heat-resistant layer is a layer having higher heat resistance than the substrate of the separator. When the separator is heated, the amount of thermal shrinkage of the heat-resistant layer is smaller than the amount of thermal shrinkage of the substrate.

Preferably, a heat-resistant layer (first heat-resistant layer) is formed on only one of the positive-electrode-side surface and the negative-electrode-side surface of the protruding part of the power storage device (D1a), and no heat-resistant layer is formed on the surface of the protruding part that is located opposite to the region in which the heat-resistant layer is formed. As will be described in relation to a manufacturing method (M1a), the curled part can be easily formed by heating the protruding part having a heat-resistant layer formed on only one surface thereof.

The separator of the power storage device (D1a) may satisfy the following condition (1), may satisfy the following conditions (1) and (2), or may satisfy the following conditions (1), (2), and (3).
(1) The curled part includes a first heat-resistant layer formed on the negative-electrode-side surface, and no heat-resistant layer is formed on the positive-electrode-side surface of the curled part.
(2) No heat-resistant layer is formed on a portion of the negative-electrode-side surface that is sandwiched between the positive electrode active material layer and the negative electrode active material layer.
(3) The separator includes a second heat-resistant layer formed on a region of the positive-electrode-side surface that overlaps the positive electrode active material layer.

If the condition (1) is satisfied, the curled part can be easily formed by heating the protruding part having the first heat-resistant layer formed thereon. If the condition (2) is satisfied, the heat-resistant layer may be formed on the negative-electrode-side surface of the separator only at the portion constituted by the protruding part. A heat-resistant layer formed so as to be opposed to the positive electrode active material layer contributes more significantly to an increase in the heat resistance of the battery than a heat-resistant layer formed so as to be opposed to the negative electrode active material layer. Therefore, the heat resistance of the separator can be particularly increased by satisfying the condition (3). Note, however, that in the separator of the power storage device according to the present disclosure, the heat-resistant layer may be formed on the negative-electrode-side surface.

Note that the power storage device (D1a) may be a power storage device that does not satisfy the above-described conditions (1) to (3). For example, the power storage device (D1a) may satisfy the following condition (4), may satisfy the following conditions (4) and (5), or may satisfy the following conditions (4), (5), and (6).
(4) The curled part includes a first heat-resistant layer formed on the positive-electrode-side surface, and no heat-resistant layer is formed on the negative-electrode-side surface of the curled part.
(5) No heat-resistant layer is formed on a portion of the positive-electrode-side surface that is sandwiched between the positive electrode active material layer and the negative electrode active material layer.
(6) The separator includes a second heat-resistant layer formed on a region of the negative-electrode-side surface that overlaps the negative electrode active material layer.

Note that only a portion of the separator may satisfy at least one of the conditions (1) to (3). In that case, another portion of the separator may satisfy at least one of the conditions (4) to (6), or may satisfy the conditions (4) and/or (5), and the condition (3). For example, when the electrode group is a wound body, one of two separators opposed to each other across the positive electrode may satisfy at least one of the conditions (1) to (3). Furthermore, the other separator may satisfy at least one of the conditions (4) to (6), or may satisfy the condition (4) and/or (5), and the condition (3).

When an end face current collecting structure is adopted in the power storage device (D1a), each of the current collectors is connected in a bent state to the corresponding current collector plate. In that case, the protruding part of the separator may be bent together with the current collector. For example, the protruding part including a curled part may be bent together with the current collector. These configurations can particularly suppress metal fine particles from entering the interior of the electrode group. This configuration can be achieved by increasing the protruding length of the protruding part. The protruding length of the protruding part can be increased by increasing the width of the separator.

### (Manufacturing method of power storage device (D1a))

A manufacturing method of the power storage device (D1a) according to the present embodiment will be described below. The manufacturing method may be hereinafter referred to as a "manufacturing method (M1a)". With this manufacturing method, it is possible to manufacture the power storage device (D1a). However, the power storage device (D1a) may be manufactured with a manufacturing method other than the manufacturing method described below. The matters described in relation to the power storage device (D1a) can be applied to the manufacturing method (M1a), and redundant descriptions may be omitted. The matters described in relation to the manufacturing method (M1a) may be applied to the power storage device (D1a).

The manufacturing method (M1a) is a manufacturing method of a power storage device including an electrode group including a positive electrode, a negative electrode, and a separator. The manufacturing method (M1a) includes step (i) and step (ii) in this order. These steps will be be described below.

### (Step (i))

The step (i) is a step of forming the electrode group by stacking the positive electrode, the negative electrode, and the separator, with the separator disposed between the positive electrode and the negative electrode. The positive electrode includes a positive electrode current collector, and a positive electrode active material layer disposed on the positive electrode current collector. The negative electrode includes a negative electrode current collector, and a negative electrode active material layer disposed on the negative electrode current collector.

The method for stacking the positive electrode, the negative electrode, and the separator is not particularly limited, and a known method may be used. For example, in the step (i), the positive electrode, the negative electrode, and the separator may be stacked by winding the positive electrode, the negative electrode, and the separator. Alternatively, a stack may be formed by stacking a plurality of flat plate-shaped positive electrodes, a plurality of flat plate-shaped negative electrodes, and sheet-shaped separators in one direction.

In the step (i), the electrode group is formed so that a portion of the separator becomes a protruding part protruding from a region in which the positive electrode active material layer and the negative electrode active material layer are opposed to each other. The amount of protrusion of the protruding part can be changed by changing the size of the separator. The separator includes a positive-electrode-side surface located toward the positive electrode adjacent to the separator, and a negative-electrode-side surface located toward the negative electrode adjacent to the separator. The separator includes a substrate, and a first heat-resistant layer formed on a surface of the protruding part.

The methods for forming the positive electrode and the negative electrode are not limited, and known methods may be used. The positive electrode can be formed, for example, by applying a positive electrode slurry for forming the positive electrode active material layer to the positive electrode current collector, followed by drying and rolling. The negative electrode can be formed, for example, by applying a negative electrode slurry for forming the negative electrode active material layer to the negative electrode current collector, followed by drying and rolling.

The separator can be formed by forming a heat-resistant layer (e.g., first heat-resistant layer) at a predetermined position of the substrate. The method for forming the heat-resistant layer is not limited, and a known method may be used. The heat-resistant layer may be formed, for example, by applying a material (e.g., slurry or coating solution) of the heat-resistant layer to the substrate, followed by drying. The application method and the drying method of the material are not limited, and it is possible to use known methods.

### (Step (ii))

The step (ii) is a step of heating at least a portion of the protruding part, to curl the at least a portion of the protruding part. The step (ii) may be performed by heating a portion of the electrode group.

The protruding part includes a substrate, and a first heat-resistant layer having higher heat resistance than the substrate. When the protruding part is heated, the amount of thermal shrinkage of the substrate is larger than the amount of thermal shrinkage of the first heat-resistant layer. Accordingly, heating the protruding part having the first heat-resistant layer formed thereon will cause the substrate to be thermally shrunk more significantly than the first heat-resistant layer, so that the protruding part is curled toward where the first heat-resistant layer is not formed. Consequently, a curled part is formed at the protruding part.

The first heat-resistant layer may be formed on the negative-electrode-side surface of the protruding part. In that case, in the step (ii), at least a portion of the protruding part can be curled toward the positive electrode adjacent to the protruding part. As stated above, at least a portion of the separator may satisfy at least one of the above-described conditions (1) to (3), or may satisfy at least one of the above-described condition (4) to (6).

After the step (i), a welding step of welding the negative electrode current collector to a negative electrode current collector plate may be included. The manufacturing method (M1a) may include, after the step (i), a welding step of welding the positive electrode current collector to a positive electrode current collector plate. The welding method is not particularly limited, and a known method may be used. For example, laser welding, arc welding (e.g., TIG welding), or any other welding method may be used.

In the manufacturing method (M1a), the step (ii) may be performed using heat generated during the welding step. With this configuration, the protruding part located in the vicinity of the welded portion can be particularly effectively curled. This provides a significant effect on spatters resulting from welding.

Before the welding step, the heating step of the step (ii) may be performed. Alternatively, the step (ii) may be further performed after the welding step. In these cases, the heating method is not particularly limited, and heating with a heater or the like may be performed, for example. Heating is performed at a temperature greater than or equal to a temperature that causes thermal shrinkage of the substrate and at which damage to the separator is minimized. The heating conditions may be selected according to the types of the substrate and the heat-resistant layer. Note that for the power storage device (D1a) of the present disclosure, the method for forming the curled part is not limited to the method in which the curled part is formed by applying heat to the protruding part of the separator as described above. For example, a distal end of the protruding part of the separator may be curled by being mechanically pressed using a mold or the like. On the other hand, for the power storage device (D1b), the deformation part is formed by applying heat to the protruding part of the separator as described above.

The method for stacking the positive electrode, the negative electrode, and the separator is not particularly limited, and a known method may be used. For example, in the step (i), the positive electrode, the negative electrode, and the separator may be stacked by winding the positive electrode, the negative electrode, and the separator. Alternatively, a stack may be formed by stacking a plurality of flat plate-shaped positive electrodes, a plurality of flat plate-shaped negative electrodes, and sheet-shaped separators in one direction.

The step performed subsequent to the step (ii) is not particularly limited, and the power storage device may be manufactured using a known method. For example, the positive electrode may be electrically connected to a positive electrode terminal, the negative electrode may be electrically connected to a negative electrode terminal (e.g., exterior member), and the electrode group and an electrolyte may be sealed in the exterior member.

### (Power storage device (D1b))

The second power storage device (D1b) is a power storage device including an electrode group including a positive electrode, a negative electrode, and a separator. The positive electrode, the negative electrode, and the separator of the electrode group are stacked in a stacking direction, with the separator disposed between the positive electrode and the negative electrode. The positive electrode includes a positive electrode current collector, and a positive electrode active material layer disposed on the positive electrode current collector. The negative electrode includes a negative electrode current collector, and a negative electrode active material layer disposed on the negative electrode current collector. The separator includes a protruding part protruding from a region in which the positive electrode active material layer and the negative electrode active material layer are opposed to each other. The separator includes a positive-electrode-side surface located toward the positive electrode adjacent to the separator, and a negative-electrode-side surface located toward the negative electrode adj acent to the separator. The at least a portion of the protruding part includes a deformation part in which a first heat-resistant layer is formed on only one of the positive-electrode-side surface and the negative-electrode-side surface. The deformation part is bent with the first heat-resistant layer facing outside. In other words, at the at least a portion of the protruding part, one of the positive-electrode-side surface and the negative-electrode-side surface has higher heat resistance than the other. Also, the protruding part is bent, with the surface having higher heat resistance facing outside of the electrode group. The protruding part may protrude, toward a direction substantially perpendicular to the stacking direction, from a region in which the positive electrode active material layer and the negative electrode active material layer are opposed to each other.

No heat-resistant layer may be formed on a portion of the one of the positive-electrode-side surface and the negative-electrode-side surface, the portion being sandwiched between the positive electrode and the negative electrode. The protruding part may protrude beyond one of the positive electrode and the negative electrode in a direction perpendicular to the stacking direction, and the deformation part may be located on an outer side of the electrode group than the one of the positive electrode and the negative electrode.

In this specification, the heat-resistant layer is a layer having higher heat resistance than the substrate of the separator. When the separator is heated, the amount of thermal shrinkage of the heat-resistant layer is smaller than the amount of thermal shrinkage of the substrate.

In the power storage device (D1b), the deformation part is present at an end portion of the protruding part of the separator. This deformation part can suppress metal fine particles (spatters, etc.) from reaching the interior (e.g., the active material layers) of the electrode group.

As stated above, when metal fine particles are attached to the interior of the electrode group, the metal fine particles may cause degradation of properties, such as a voltage drop, and a reduction in the yield during manufacture. For example, a case shall be considered in which a power storage device having an end face current collecting structure is manufactured using a copper foil as a current collector. In this case, spatters (copper fine particles) containing copper may be scattered when connecting the copper foil to a current collector plate by welding. When the scattered copper fine particles are attached to a positive electrode active material layer, the fine particles are ionized, for example, during charging and discharging, and are further deposited on a negative electrode active material layer. When the copper deposited on the negative electrode active material layer grows in a dendritic form, this dendritic copper may result in a micro-short circuit between a positive electrode and a negative electrode. The micro-short circuit may result in degradation of properties, such as a voltage (e.g., battery voltage) drop. The deformation part of the power storage device (D1b) suppresses the metal fine particles from reaching the interior of the electrode group. Accordingly, the power storage device (D1b) can suppress degradation of properties of the power storage device. In addition, the power storage device (D1b) can increase the yield during manufacture.

Note that spatters generated during welding may be scattered during welding, but may remain in the vicinity of the welded portion during welding and move over time. The power storage device (D1b) can also suppress the spatters from moving to the interior of the electrode group over time.

The folded-back structure of the separator described in Patent Literature 1 is not formed by the separator alone. Accordingly, the folded-back structure of the separator described in Patent Literature 1 is affected by electrode expansion and contraction associated with charging and discharging. In contrast, the deformation part of the power storage device (D1b) can be formed independently of the shapes and configurations of the other members. Accordingly, the deformation part of the power storage device (D1b) is less likely to be affected by electrode expansion and contraction associated with charging and discharging.

The present inventors have newly found that a deformation part that can be deformed can be formed by forming a heat-resistant layer on a surface of the protruding part of the separator. Some embodiments of the present disclosure utilize this new finding.

In the power storage device (D1b), the deformation part may be formed over the entire region of the protruding part, or may be formed only at a portion of the protruding part.

In the power storage device (D1b), the one of the positive-electrode-side surface and the negative-electrode-side surface on which the above-described first heat-resistant layer is formed may be the negative-electrode-side surface. With this configuration, the deformation part can be bent (e.g., curled) toward the positive electrode. When metal fine particles are attached to the positive electrode active material layer, a micro-short circuit due to ionization and deposition of the metal fine particles is particularly likely to occur. Accordingly, in order to suppress attachment of metal fine particles to the positive electrode active material layer, it is preferable that the deformation part is bent toward the positive electrode adj acent to the protruding part. Note that the above-described first heat-resistant layer may be formed on the positive-electrode-side surface. This allows the deformation part to be bent toward the negative electrode. Alternatively, the first heat-resistant layer on a portion of the protruding part may be formed on the positive-electrode-side surface, and the first heat-resistant layer on another portion of the protruding part may be formed on the negative-electrode-side surface.

In the power storage device (D1b), the separator may include a second heat-resistant layer formed in a region of the other of the positive-electrode-side surface and the negative-electrode-side surface that is not the one of the positive-electrode-side surface and the negative-electrode-side surface, the region overlapping the positive electrode active material layer or the negative electrode active material layer. For example, when the one of the positive-electrode-side surface and the negative-electrode-side surface on which the above-described first heat-resistant layer is formed is the negative-electrode-side surface, the separator may include a second heat-resistant layer formed in a region of the positive-electrode-side surface that overlaps the positive electrode active material layer. When the one of the positive-electrode-side surface and the negative-electrode-side surface on which the above-described first heat-resistant layer is formed is the positive-electrode-side surface, the separator may include a second heat-resistant layer formed in a region of the negative-electrode-side surface that overlaps the negative electrode active material layer. By forming the second heat-resistant layer, it is possible to suppress the separator from being shrunk even when the temperature of the power storage device (D1b) is elevated. Thus, the heat resistance of the power storage device (D1b) can be increased by forming the second heat-resistant layer.

The power storage device (D1b) may further include a negative electrode current collector plate. In that case, the negative electrode current collector may be welded to the negative electrode current collector plate. In that case, it is preferable that the protruding part disposed on the negative electrode current collector plate side includes the deformation part. With this configuration, spatters generated when welding the negative electrode current collector to the negative electrode current collector plate can be suppressed from reaching the interior of the electrode group. As will be described later, the deformation part can be deformed when welding the negative electrode current collector to the negative electrode current collector plate.

When a metal foil containing copper is used as the negative electrode current collector of the power storage device (D1b), spatters containing copper are generated during welding. When the spatters containing copper are attached to the positive electrode active material layer, the copper is likely to be ionized and subsequently deposited on the negative electrode active material, causing a micro-short circuit. Therefore, it is preferable that the protruding part disposed on the negative electrode current collector plate side includes the deformation part.

The power storage device (D1b) may further include a positive electrode current collector plate, and the positive electrode current collector may be welded to the positive electrode current collector plate. The separator may include, on the positive electrode current collector plate side, the protruding part including the deformation part. In this case, the deformation part on the positive electrode current collector plate side may be bent toward the negative electrode with the first heat-resistant layers facing outside. The separator may include, on both the negative electrode current collector plate side and the positive electrode current collector plate side, the protruding part including the deformation part. This configuration can particularly suppress metal fine particles from reaching the interior of the electrode group. Note that one of the positive electrode and the negative electrode may collect current using a known structure other than the end face current collecting structure. Note that in this specification, the positive electrode current collector plate side and the negative electrode current collector plate side may be respectively read as the opening side of a bottomed tubular case and the bottom side of the case. Note, however, that in the power storage device according to the present disclosure, the positive electrode may be electrically connected to the case, and the negative electrode may be electrically connected to the sealing plate.

In the power storage device (D1b), the separator may include a first separator and a second separator disposed so as to sandwich the positive electrode therebetween. The deformation part may include a first deformation part of the first separator, and a second deformation part of the second separator. Alternatively, the deformation part may be formed on only the first separator or the second separator.

In the electrode group of the power storage device (D1b), the positive electrode, the negative electrode, and the separator may be stacked by winding the positive electrode, the negative electrode, and the separator. That is, the electrode group may be a wound body. In this case, each of the positive electrode, the negative electrode, and the separator is band-shaped. In the wound body, the positive electrode, the negative electrode, and the separator are stacked in the radial direction of the wound body. The wound body may be a columnar wound body or any other wound body.

When the electrode group of the power storage device (D1b) is a wound body, the negative electrode current collector may be disposed on the outermost circumference of the wound body. With this configuration, when the case also serves as a negative electrode terminal, the negative electrode current collector on the outermost circumference and the inner surface of the case can come into contact with each other to form a current collection path. This configuration can be realized by disposing the negative electrode on the outermost circumference and not forming the negative electrode active material layer on at least a portion of the outermost circumference.

The electrode group of the power storage device (D1b) may be a stack obtained by stacking a plurality of flat plate-shaped positive electrodes, a plurality of flat plate-shaped negative electrodes, and sheet-shaped separators. Such a stack can be formed by stacking the positive electrodes, the negative electrodes, and the separators such that the positive electrodes and the negative electrodes are alternately disposed, and that the separators are disposed between the positive electrodes and the negative electrodes. In such a stacked electrode group, the plurality of positive electrodes and the plurality of negative electrodes may be disposed so as to be displaced from each other in the direction perpendicular to the stacking direction.

When an end face current collecting structure is adopted in the power storage device (D1b), each of the current collectors is connected in a bent state to the corresponding current collector plate. In that case, the protruding part of the separator may be bent together with the current collector. For example, the protruding part including a deformation part may be bent together with the current collectors. These configurations can particularly suppress metal fine particles from entering the interior of the electrode group. This configuration can be achieved by increasing the protruding length of the protruding part. The protruding length of the protruding part can be increased by increasing the width of the separator.

### (Manufacturing method of power storage device (D1b))

A manufacturing method of the power storage device (D1b) according to the present embodiment will be described below. The manufacturing method may be hereinafter referred to as a "manufacturing method (M1b)". With this manufacturing method, it is possible to manufacture the power storage device (D1b). However, the power storage device (D1b) may be manufactured with a manufacturing method other than the manufacturing method described below. The matters described in relation to the power storage device (D1b) can be applied to the manufacturing method (M1b), and redundant descriptions may be omitted. The matters described in relation to the manufacturing method (M1b) may be applied to the power storage device (D1b).

The manufacturing method (M1b) is a manufacturing method of a power storage device including an electrode group including a positive electrode, a negative electrode, and a separator. The manufacturing method (M1b) includes step (i) and step (ii) in this order. These steps will be be described below.

### (Step (i))

The step (i) is a step of forming the electrode group by stacking the positive electrode, the negative electrode, and the separator, with the separator disposed between the positive electrode and the negative electrode. The positive electrode includes a positive electrode current collector, and a positive electrode active material layer disposed on the positive electrode current collector. The negative electrode includes a negative electrode current collector, and a negative electrode active material layer disposed on the negative electrode current collector.

The method for stacking the positive electrode, the negative electrode, and the separator is not particularly limited, and a known method may be used. For example, in the step (i), the positive electrode, the negative electrode, and the separator may be stacked by winding the positive electrode, the negative electrode, and the separator. Alternatively, a stack may be formed by stacking a plurality of flat plate-shaped positive electrodes, a plurality of flat plate-shaped negative electrodes, and sheet-shaped separators in one direction.

In the step (i), the electrode group is formed so that a portion of the separator becomes a protruding part protruding from a region in which the positive electrode active material layer and the negative electrode active material layer are opposed to each other. The amount of protrusion of the protruding part can be changed by changing the size of the separator. The separator includes a positive-electrode-side surface located toward the positive electrode adjacent to the separator, and a negative-electrode-side surface located toward the negative electrode adjacent to the separator. The at least a portion of the protruding part includes a deformation part in which a first heat-resistant layer is formed on only one of the positive-electrode-side surface and the negative-electrode-side surface. That is, the separator includes a substrate, and a first heat-resistant layer formed on a surface of the protruding part. No heat-resistant layer is formed on a portion of the one of the positive-electrode-side surface and the negative-electrode-side surface on which the first heat-resistant layer is formed, the portion being sandwiched between the positive electrode and the negative electrode.

The methods for forming the positive electrode and the negative electrode are not limited, and known methods may be used. The positive electrode can be formed, for example, by applying a positive electrode slurry for forming the positive electrode active material layer to the positive electrode current collector, followed by drying and rolling. The negative electrode can be formed, for example, by applying a negative electrode slurry for forming the negative electrode active material layer to the negative electrode current collector, followed by drying and rolling.

The separator can be formed by forming a heat-resistant layer (e.g., first heat-resistant layer) at a predetermined position of the substrate. The method for forming the heat-resistant layer is not limited, and a known method may be used. The heat-resistant layer may be formed, for example, by applying a material (e.g., slurry or coating solution) of the heat-resistant layer to the substrate, followed by drying. The application method and the drying method of the material are not limited, and it is possible to use known methods.

### (Step (ii))

The step (ii) is a step of heating at least a portion of the protruding part, to deform the deformation part. The step (ii) may be performed by heating a portion of the electrode group.

The protruding part includes a substrate, and a first heat-resistant layer having higher heat resistance than the substrate. When the protruding part is heated, the amount of thermal shrinkage of the substrate is larger than the amount of thermal shrinkage of the first heat-resistant layer. Accordingly, heating the protruding part having the first heat-resistant layer formed thereon will cause the substrate to be thermally shrunk more significantly than the first heat-resistant layer, so that the protruding part is curled toward where the first heat-resistant layer is not formed. Consequently, the deformation part of the protruding part is deformed.

After the step (i), a welding step of welding the negative electrode current collector to a negative electrode current collector plate may be included. The manufacturing method (M1b) may include, after the step (i), a welding step of welding the positive electrode current collector to a positive electrode current collector plate. The welding method is not particularly limited, and a known method may be used. For example, laser welding, arc welding (e.g., TIG welding), or any other welding method may be used.

In the manufacturing method (M1b), the step (ii) may be performed using heat generated during the welding step. With this configuration, the deformation part located in the vicinity of the welded portion can be particularly effectively curled. This provides a significant effect on spatters resulting from welding.

Before the welding step, the heating step of the step (ii) may be performed. Alternatively, the step (ii) may be further performed after the welding step. In these cases, the heating method is not particularly limited, and heating with a heater or the like may be performed, for example. Heating is performed at a temperature greater than or equal to a temperature that causes thermal shrinkage of the substrate and at which damage to the separator is minimized. The heating conditions may be selected according to the types of the substrate and the heat-resistant layer.

The step performed subsequent to the step (ii) is not particularly limited, and the power storage device may be manufactured using a known method. For example, the positive electrode may be electrically connected to a positive electrode terminal, the negative electrode may be electrically connected to a negative electrode terminal (e.g., exterior member), and the electrode group and an electrolyte may be sealed in the exterior member.

### (Power storage device (D2))

The third power storage device (D2) includes an electrode group including a positive electrode, a negative electrode, and a separator, and at least one current collector plate. The positive electrode, the negative electrode, and the separator of the electrode group are stacked, with the separator disposed between the positive electrode and the negative electrode. The positive electrode includes a positive electrode current collector, and a positive electrode active material layer disposed on the positive electrode current collector. The negative electrode includes a negative electrode current collector, and a negative electrode active material layer disposed on the negative electrode current collector. The positive electrode current collector includes a first exposed part on which the positive electrode active material layer is not formed. The negative electrode current collector includes a second exposed part on which the negative electrode active material layer is not formed. The separator includes a protruding part protruding from a region in which the positive electrode active material layer and the negative electrode active material layer are opposed to each other. At least one selected from the group consisting of the first exposed part and the second exposed part is welded in a bent state to at least one current collector plate. The at least one exposed part may be hereinafter referred to as the "exposed part (E)". At least a portion of the protruding part is bent together with the exposed part (E) (at least one exposed part). The protruding part protrudes beyond an end portion of the positive electrode active material layer and an end portion of the negative electrode active material layer.

As stated above, when metal fine particles are attached to the interior of the electrode group, the metal fine particles may cause degradation of properties, such as a voltage drop, and a reduction in the yield during manufacture. For example, a case shall be considered in which a power storage device having an end face current collecting structure is manufactured using a copper foil as a current collector. In this case, spatters (copper fine particles) containing copper may be scattered when connecting the copper foil to a current collector plate by welding. When the scattered copper fine particles are attached to a positive electrode active material layer, the fine particles are ionized, for example, during charging and discharging, and are deposited on a negative electrode active material layer. When the copper deposited on the negative electrode active material layer grows in a dendritic form, this dendritic copper may result in a micro-short circuit between a positive electrode and a negative electrode. The micro-short circuit may result in degradation of properties, such as a voltage (e.g., battery voltage) drop. In the power storage device (D2), the protruding part of the separator is bent together with the exposed part (E), so that it is possible to suppress metal fine particles from reaching the interior of the electrode group. Accordingly, the power storage device (D2) can suppress degradation of properties of the power storage device. In addition, the power storage device (D2) can increase the yield during manufacture.

Note that spatters generated during welding may be scattered during welding, but may remain in the vicinity of the welded portion during welding and move over time. The power storage device (D2) can also suppress the spatters from moving to the interior of the electrode group over time.

In the power storage device (D2), the protruding part of the separator is bent together with the exposed part of the current collector. Accordingly, it is preferable that the length of the protruding part of the power storage device (D2) is larger than the length of protruding part of a separator of a typical power storage device. As the length of the protruding part, the length of the exposed part (E), the bent position of the exposed part (E), and their relationship, examples of the ranges and the relationship given in Embodiment 2 may be used.

The at least one exposed part (E) may include a plurality of exposed regions disposed along the stacking direction SD of the electrode group, and the at least a portion of the protruding part may include a plurality of protruding regions disposed along the stacking direction SD of the electrode group. Also, two of the protruding regions sandwiched between two of the adjacent exposed regions may be bent together with the two exposed regions. In this case, it is preferable that the two protruding regions sandwiched between the two exposed regions are in contact with each other. These configurations can particularly suppress metal fine particles from reaching the interior of the electrode group.

The power storage device (D2) may satisfy the following condition (1), may satisfy the following conditions (1) and (2), or may satisfy the following condition (1), (2), and (3).
(1) The at least one current collector plate to which the exposed part (E) is welded includes a negative electrode current collector plate, and the at least one exposed part (E) includes the second exposed part.
(2) Of the protruding part, the whole of the protruding part present on the negative electrode current collector plate side is bent together with the second exposed part.
(3) The negative electrode current collector contains copper.

If the condition (1) is satisfied, spatters generated when welding the negative electrode current collector to the negative electrode current collector plate can be suppressed from reaching the interior of the electrode group. Satisfying the condition (2) provides a particularly significant effect. When a metal foil containing copper is used as the negative electrode current collector, spatters containing copper are generated during welding. When the spatters containing copper are attached to the positive electrode active material layer, the copper is likely to be ionized and subsequently deposited on the negative electrode active material, causing a micro-short circuit. Therefore, when the negative electrode current collector contains copper, it is particularly preferable that the protruding part is bent together with the second exposed part on the negative electrode current collector plate side.

If the power storage device (D2) satisfies the above-described condition (1), the power storage device (D2) may further satisfy the following condition (4), or may further satisfy the following conditions (4) and (5).
(4) The at least one current collector plate to which the exposed part (E) is welded further includes a positive electrode current collector plate, and the at least one exposed part (E) further includes a first exposed part.
(5) Of the protruding part, the whole of the protruding part present on the positive electrode current collector plate side is bent together with the first exposed part.

If the condition (4) is satisfied, the first exposed part of the positive electrode current collector is welded in a bent state to the positive electrode current collector plate, and the second exposed part of the negative electrode current collector is welded in a bent state to the negative electrode current collector plate. This configuration can suppress spatters from the positive electrode current collector plate side and spatters from the negative electrode current collector plate side from reaching the interior of the electrode group. Satisfying the condition (5) provides a particularly significant effect.

The electrode group of the power storage device (D2) may be a wound body. In that case, the positive electrode, the negative electrode, and the separator of the electrode group are stacked by winding the positive electrode, the negative electrode, and the separator. The wound body may be a columnar wound body, or may be any other wound body.

When the electrode group of the power storage device (D2) is a wound body, the at least one exposed part (E) may be bent toward the center (central axis) of the wound body, or may be bent toward the outside of the wound body. In the case where the exposed part (E) is bent toward the center of the wound body, the exposed part (E) will not, in principle, interfere with the case when the exposed part (E) is bent.

When the electrode group of the power storage device (D2) is a wound body, the negative electrode current collector (second exposed part) may be present on the outermost circumference of the wound body. In this case, of the negative electrode current collector on the outermost circumference, a portion adj acent to the protruding part is bent. Thus, when the negative electrode current collector and the protruding part as a whole are collapsed toward the inner circumference of the wound body, all the protruding regions arranged in the stacking direction, including the outermost circumference of the protruding part, can be covered and protected by the exposed regions of the negative electrode current collector. Conversely, when the negative electrode current collector and the protruding part are collapsed toward the outer circumference of the wound body in the stacking direction, a configuration in which the negative electrode current collector is present on the innermost circumference of the wound body can provide the same effect as the above-described configuration in which the negative electrode current collector is present on the outermost circumference. When the negative electrode current collector is present on the outermost circumference of the wound body, a current collection path can be formed between the inner surface of the case and the negative electrode current collector on the outermost circumference if the case also serves as a negative electrode terminal.

When the electrode group of the power storage device (D2) is a wound body, the first exposed part on the positive electrode current collector plate side may be bent together with at least a portion of the protruding part on the positive electrode current collector plate side, and be welded to the positive electrode current collector plate, or the second exposed part on the negative electrode current collector plate side may be bent together with at least a portion of the protruding part on the negative electrode current collector plate side and be welded to the negative electrode current collector plate. Note that in this specification, the positive electrode current collector plate side and the negative electrode current collector plate side may be respectively read as the opening side of a bottomed tubular case and the bottom side of the case. Note, however, that in the power storage device according to the present disclosure, the positive electrode may be electrically connected to the case, and the negative electrode may be electrically connected to the sealing plate.

The electrode group of the power storage device (D2) may be a stack obtained by stacking a plurality of flat plate-shaped positive electrodes, a plurality of flat plate-shaped negative electrodes, and sheet-shaped separators. Such a stack can be formed by stacking the positive electrodes, the negative electrodes, and the separators such that the positive electrodes and the negative electrodes are alternately disposed, and that the separators are disposed between the positive electrodes and the negative electrodes.

### (Manufacturing method of power storage device (D2))

A manufacturing method of the power storage device (D2) according to the present embodiment will be described below. The manufacturing method may be hereinafter referred to as a "manufacturing method (M2)". With this manufacturing method, it is possible to manufacture the power storage device (D2). However, the power storage device (D2) may be manufactured with a manufacturing method other than the manufacturing method described below. The matters described in relation to the power storage device (D2) can be applied to the manufacturing method (M2), and redundant descriptions may be omitted. The matters described in relation to the manufacturing method (M2) may be applied to the power storage device (D2).

The manufacturing method (M2) is a manufacturing method of a power storage device including an electrode group including a positive electrode, a negative electrode, and a separator. The manufacturing method (M2) includes step (I) and step (II) in this order. These steps will be be described below.

### (Step (I))

The step (I) is a step of forming the electrode group by stacking the positive electrode, the negative electrode, and the separator, with the separator disposed between the positive electrode and the negative electrode. The positive electrode includes a positive electrode current collector, and a positive electrode active material layer disposed on the positive electrode current collector. The negative electrode includes a negative electrode current collector, and a negative electrode active material layer disposed on the negative electrode current collector.

The method for stacking the positive electrode, the negative electrode, and the separator is not particularly limited, and a known method may be used. For example, in the step (I), the positive electrode, the negative electrode, and the separator may be stacked by winding the positive electrode, the negative electrode, and the separator. Alternatively, a stack may be formed by stacking a plurality of flat plate-shaped positive electrodes, a plurality of flat plate-shaped negative electrodes, and sheet-shaped separators in one direction.

In the step (I), the electrode group is formed so that a portion of the separator becomes a protruding part protruding from a region in which the positive electrode active material layer and the negative electrode active material layer are opposed to each other. The protruding length of the protruding part can be changed by changing the size of the separator.

The methods for forming the positive electrode and the negative electrode are not limited, and known methods may be used. The positive electrode can be formed, for example, by applying a positive electrode slurry for forming the positive electrode active material layer to the positive electrode current collector, followed by drying and rolling. The negative electrode can be formed, for example, by applying a negative electrode slurry for forming the negative electrode active material layer to the negative electrode current collector, followed by drying and rolling.

### (Step (II))

The step (II) is a step of welding the exposed part (E) to the current collector plate while at least a portion of the protruding part is bent together with the exposed part (E). By increasing the protruding length Ls of the protruding part, the protruding part can be easily bent together with the exposed part (E). Therefore, it is preferable that the protruding length Ls of the power storage device (D2) is larger than the protruding length Ls of a typical power storage device.

The welding method is not particularly limited, and a known method may be used. For example, laser welding, arc welding (e.g., TIG welding), or any other welding method may be used.

The step performed subsequent to the step (II) is not particularly limited, and the power storage device may be manufactured using a known method. For example, the positive electrode may be electrically connected to a positive electrode terminal, the negative electrode may be electrically connected to a negative electrode terminal (e.g., exterior member), and the electrode group and an electrolyte may be sealed in the exterior member.

### (Example of configuration of power storage device (D))

An example of the configuration of the power storage device (D) (power storage device (D1) and power storage device (D2)) will be described below. Note, however, that the configuration of the power storage device (D) is not limited to the example described below.

Examples of the power storage device (D) include a secondary battery and a capacitor. Examples of the secondary battery include a non-aqueous electrolyte secondary battery and other secondary batteries. Examples of the non-aqueous electrolyte secondary battery include a lithium ion secondary battery. Examples of the capacitor include a lithium ion capacitor.

The power storage device (D) includes a positive electrode (positive electrode plate), a negative electrode (negative electrode plate), and a separator, and, usually, further includes an electrolyte and an exterior member. These members are selected according to the type of the power storage device (D). Known configurations may be applied to configurations that are not included in the description given above in relation to the power storage device (D). The following describes an exemplary configuration when the power storage device (D) is a lithium ion secondary battery. When the power storage device (D) is not a lithium ion secondary battery, the members are selected according to the type of the power storage device (D).

### (Positive electrode)

The positive electrode includes a positive electrode current collector, a positive electrode active material layer formed on one or both surfaces of the positive electrode current collector. As the positive electrode current collector, it is possible to use a metal foil such as an aluminum foil or an aluminum alloy foil. The thickness of the positive electrode current collector may be in the range from 100 µm to 300 µm (e.g., in the range from 140 µm to 210 µm), or may be in other ranges. The positive electrode active material layer includes a positive electrode active material, and may include other additives (conductive material, binder, etc.) as necessary. Examples of the positive electrode active material include lithium-containing transition metal oxides.

### (Negative electrode)

The negative electrode includes a negative electrode current collector, and a negative electrode active material layer formed on one or both surfaces of the negative electrode current collector. As the negative electrode current collector, it is possible to use a metal foil such as a copper foil or a copper alloy. The thickness of the negative electrode current collector may be in the range from 100 µm to 300 µm (e.g., in the range from 150 µm to 210 µm), or may be in other ranges. The negative electrode active material layer includes a negative electrode active material, and may include other additives (conductive material, a binder, etc.) as necessary. Examples of the negative electrode active material include carbonaceous materials (e.g., graphite).

### (Positive electrode current collector plate and negative electrode current collector plate)

The positive electrode current collector plate and the negative electrode current collector plate are not particularly limited, and known current collector plates may be used. For example, as the positive electrode current collector plate and the negative electrode current collector plate, it is possible to use an aluminum plate or a copper plate, or a metal plate having a predetermined metal coating layer (e.g., a plated layer) formed thereon. The metal coating layer may be a nickel-plated layer. The current collector plate may be a nickel-plated iron plate or a nickel-plated copper plate.

### (Separator of power storage device (D1))

An example of the separator of the power storage device (D1) includes a substrate, and a heat-resistant layer formed on a predetermined portion of the substrate. Examples of the heat-resistant layer include the first heat-resistant layer and the second heat-resistant layer described above.

The substrate is not particularly limited, and a known substrate used as a substrate of a separator of a lithium ion secondary battery may be used. As the substrate, it is possible to use a microporous film, a woven fabric, a non-woven fabric, or the like. Examples of the material of the substrate include resins such as polyolefins (polypropylene, polyethylene, etc.). The thickness of the substrate may be in the range from 5 µm to 25 µm (the range from 10 µm to 20 µm), or may be in other ranges.

The heat-resistant layer has higher heat resistance than the substrate. By using, as the resin forming the heat-resistant layer, a resin having higher heat resistance than the resin (e.g., resin having a higher melting point or softening point) forming the substrate, the heat resistance of the heat-resistant layer can be made higher than the heat resistance of the substrate. The heat-resistant layer may be formed of a resin, or may include a resin and an inorganic filler.

Examples of the resin having high heat resistance that can be used for the heat-resistant layer include an aramid resin. Examples of the inorganic filler that can be used for the heat-resistant layer include inorganic particles of alumina, silica, titania, and the like. The inclusion of the inorganic filler can increase the heat resistance of the heat-resistant layer.

The composition of the first heat-resistant layer formed on the protruding part and the composition of the second heat-resistant layer disposed between the positive electrode active material layer and the negative electrode active material layer may be the same or different. The thickness of the first heat-resistant layer may be in the range from 2 µm to 10 µm (e.g., in the range from 2 µm to 5 µm). With this range, the curled part (or deformation part) is particularly likely to be formed. The thickness of the second heat-resistant layer may be in the range from 2 µm to 10 µm (e.g., in the range from 2 µm to 5 µm). With this range, both the heat resistance increase and the storage capacity retention for the power storage device (D1) can be achieved in a well-balanced manner. Note that the thickness of the heat-resistant layer may be a thickness in any range other than the ranges provided herein as examples.

In a preferred example of the separator, the substrate is a microporous film of a polyolefin resin (polypropylene, polyethylene, etc.), and the heat-resistant layer includes an aramid resin. In this case, the heat-resistant layer may include an aramid resin and an inorganic filler (e.g., alumina particles). Alternatively, the heat-resistant layer may include an inorganic filler alone without including an aramid resin.

### (Separator of power storage device (D2))

The separator of the power storage device (D2) is not particularly limited, and a known separator used as a separator of a lithium ion secondary battery may be used. As the separator, it is possible to use a microporous film, a woven fabric, a non-woven fabric, or the like. Examples of the material of the separator include resins such as polyolefins (polypropylene, polyethylene, etc.). The thickness of the separator may be in the range from 5 µm to 25 µm (in the range from 10 µm to 20 µm), or may be in other ranges.

The separator of the power storage device (D2) may include a substrate, and a heat-resistant layer disposed on the substrate. As the substrate, the above-described separator may be used. The heat-resistant layer has higher heat resistance than the substrate. The heat-resistant layer may be formed of a resin, or may include a resin and an inorganic filler. By using the separator including the heat-resistant layer, it is possible to suppress the substrate from being shrunk when the temperature of the power storage device (D2) is elevated. Accordingly, it is possible to increase the heat resistance of the power storage device (D2).

Examples of the resin having high heat resistance that can be used for the heat-resistant layer include an aramid resin. Examples of the inorganic filler that can be used for the heat-resistant layer include inorganic particles of alumina, silica, titania, and the like. The inclusion of the inorganic filler can increase the heat resistance of the heat-resistant layer.

### (Other configurations)

The electrolyte is not particularly limited, and a known non-aqueous electrolyte used for a lithium ion secondary battery may be used. An example of the non-aqueous electrolyte has lithium ion conductivity, and contains a lithium salt, and a non-aqueous solvent that dissolves the lithium salt. The exterior member is not particularly limited, and a known exterior member used for a lithium ion secondary battery may be used.

### (Embodiment 1)

In the following, examples of the power storage device (D1a) and the manufacturing method (M1a) according to the present disclosure will be described specifically with reference to the drawings. The above-described constituent elements can be applied to the constituent elements of the examples described below. The examples described below can be changed based on the above descriptions. The matters described below may be applied to the embodiment described above. In the examples described below, matters that are not essential to the power storage device (D1a) and the manufacturing method (M1a) may be omitted. The following describes examples in which the power storage device (D1a) is a lithium ion secondary battery. Note that the power storage device (D1b) can also be manufactured using the method described below.

The following description regarding Embodiment 1 of the power storage device (D1a) can be applied to the power storage device (D1b) as long as no inconsistency arises in the description. In that case, "curled part" may be read as "deformation part", and "curled" may be read as "deformed".

To facilitate viewing, illustrations of some of the constituent elements shall be omitted from the following drawings. In addition, to facilitate viewing, hatching may be omitted from the following drawings.

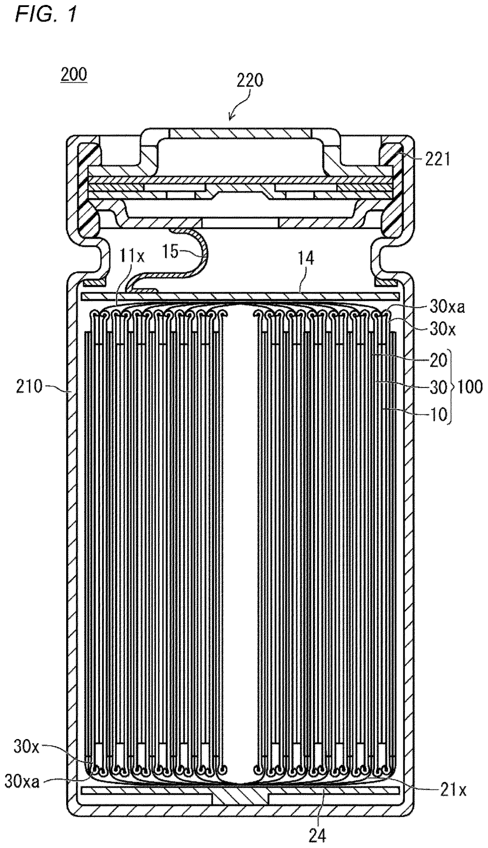

FIG. 1 is a vertical cross-sectional view schematically showing the configuration of a battery 200 of Embodiment 1. The battery 200 is an example of the power storage device (D1a), and is a cylindrical lithium ion secondary battery. The battery 200 includes a columnar wound body (electrode group) 100, a non-aqueous electrolyte (not shown), a case 210, a sealing plate 220, and a gasket 221. The case 210, which is a bottomed metal case, accommodates the wound body 100 and the non-aqueous electrolyte. The sealing plate 220 seals an opening of the case 210. The battery 200 further includes a positive electrode current collector plate 14, a negative electrode current collector plate 24, and a tab lead 15.

The wound body 100 is formed by winding a band-shaped positive electrode 10 and a band-shaped negative electrode 20, with a band-shaped separator 30 interposed therebetween. The positive electrode 10, the negative electrode 20, and the separator 30 of the wound body 100 are stacked in the radial direction. The separator 30 is disposed between the positive electrode 10 and the negative electrode 20. A gasket 221 is disposed at a peripheral edge portion of the sealing plate 220. The interior of the case 210 is sealed by crimping an opening end portion of the case 210 onto the gasket 221.

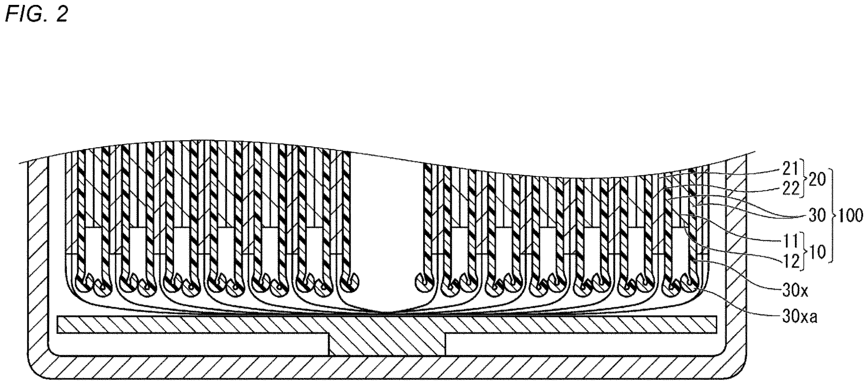

As shown in FIG. 2, the positive electrode 10 includes a positive electrode current collector 11, and positive electrode active material layers 12 formed on both surfaces of the positive electrode current collector 11. As shown in FIG. 1, the positive electrode current collector 11 includes an exposed part 11x on which the positive electrode active material layer 12 is not formed. The exposed part 11x on the positive electrode current collector plate 14 side is bent toward the center of the wound body 100 and welded to the positive electrode current collector plate 14. The tab lead 15 is connected to the positive electrode current collector plate 14 and the sealing plate 220. Consequently, the positive electrode 10 is electrically connected to the sealing plate 220, and the sealing plate 220 functions as an external positive electrode terminal.

The negative electrode 20 includes a negative electrode current collector 21, and negative electrode active material layers 22 formed on both surfaces of the negative electrode current collector 21. The negative electrode current collector 21 includes an exposed part 21x on which the negative electrode active material layer 22 is not formed. The exposed part 21x on the negative electrode current collector plate 24 side is bent toward the center of the wound body 100 and welded to the negative electrode current collector plate 24. The negative electrode current collector plate 24 is welded to an inner bottom surface of the case 210. Consequently, the negative electrode 20 is electrically connected to the case 210, and the case 210 functions as an external negative electrode terminal.

Note that in FIGS. 1 and 2, to facilitate viewing, a slight gap exists between the exposed part 11x and the positive electrode current collector plate 14, and between the exposed part 21x and the negative electrode current collector plate 24; however, these exposed parts and the corresponding current collector plates are welded and connected together. Also, in FIGS. 1 and 2, illustrations of heat-resistant layers have been omitted to facilitate viewing.

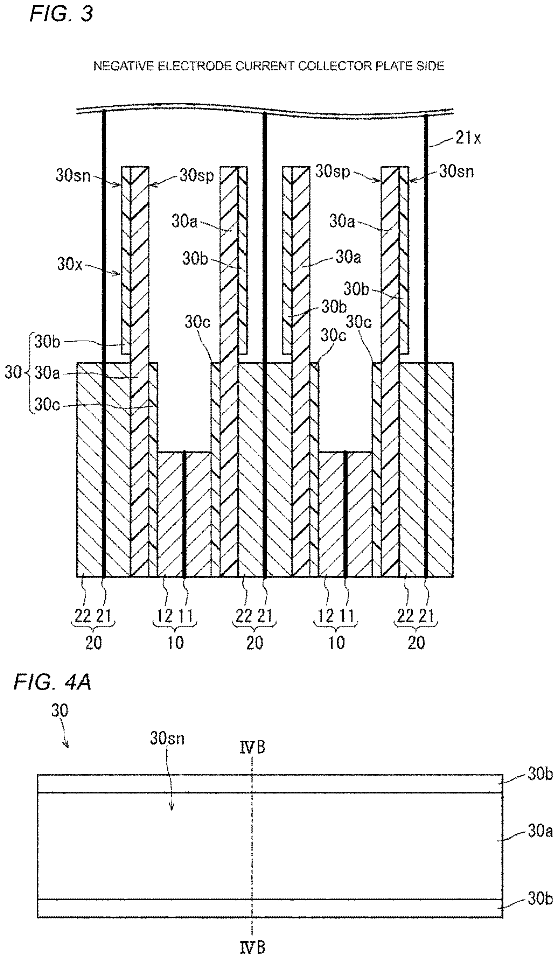

The separator 30 includes protruding parts 30x protruding from a region in which the positive electrode active material layers 12 and the negative electrode active material layers 22 are opposed to each other, and also protruding, on the negative electrode current collector plate 24 side, beyond an end portion of the positive electrode 10 on the negative electrode current collector plate 24 side. Each of the protruding parts 30x includes, at an end portion thereof, a curled part 30xa that is curled toward the positive electrode 10 to which the protruding part 30x is adjacent. Embodiment 1 shows an example in which the protruding part 30x on the positive electrode current collector plate 14 side and the protruding part 30x on the negative electrode current collector plate 24 side each include a curled part 30xa. The curled part 30xa provides the above-described effects. Although not shown in FIGS. 1 and 2, no heat-resistant layer is formed on a negative-electrode-side surface of the curled part 30xa (see FIG. 3).

An example of the arrangement of the heat-resistant layers will be described together with an example of the manufacturing method of the battery 200. In the example of the manufacturing method of the battery 200, first, a positive electrode 10, a negative electrode 20, and a separator 30 are prepared. These can be formed using the above-described methods.

FIG. 3 schematically shows a portion (portion in the vicinity of the negative electrode current collector plate 24) of the wound body 100 formed by the positive electrode 10, the negative electrode 20, and the separator 30. Note, however, that the wound body shown in FIG. 3 is the wound body before the curled part 30xa is formed.

As shown in FIG. 3, the separator 30 includes a substrate 30a, and heat-resistant layers 30b and 30c formed on the substrate 30a. The separator 30 has a positive-electrode-side surface 30sp located toward the positive electrode 10 adjacent to the separator 30 and a negative-electrode-side surface 30sn located toward the negative electrode 20 adjacent to the separator 30.

The heat-resistant layer 30b is a heat-resistant layer (first heat-resistant layer) formed on the negative-electrode-side surface 30sn of the protruding part 30x (which later forms a curled part 30xa). The heat-resistant layer 30c is a heat-resistant layer (second heat-resistant layer) formed in a region of the positive-electrode-side surface 30sp of the separator 30, the region being in contact (overlapping) the positive electrode active material layer 12. No heat-resistant layer is formed on the positive-electrode-side surface 30sp of the protruding part 30x (which later forms a curled part 30xa). Also, of the surfaces of the separator 30, no heat-resistant layer is formed on a portion of the negative-electrode-side surface 30sn that is sandwiched between the positive electrode active material layer 12 and the negative electrode active material layer 22. Note that the arrangement of the heat-resistant layers is not limited to the arrangement shown in FIG. 3. A heat-resistant layer may be formed on at least one surface of the protruding part 30x.

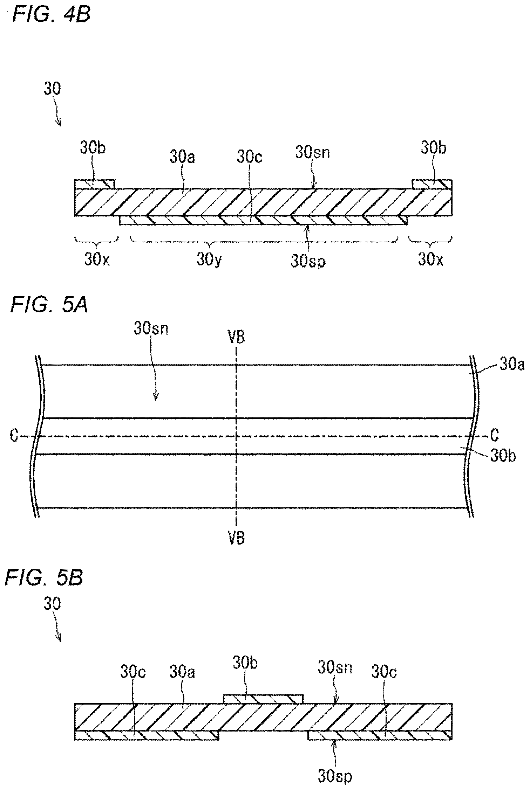

When the battery 200 shown in FIG. 1 in which the curled parts are formed on both the positive electrode current collector plate side and the negative electrode current collector plate side, the heat-resistant layers 30b and 30c may be formed on the substrate 30a of the separator 30 as shown in FIGS. 4A and 4B. FIG. 4B is a cross-sectional view taken along the line IVB-IVB in FIG. 4A. The separator 30 shown in FIG. 4 includes portions to form protruding parts 30x, and a portion 30y to be sandwiched between the positive electrode active material layer 12 and the negative electrode active material layer 22.

When the curled part is formed on only one of the positive electrode current collector plate side and the negative electrode current collector plate side, the heat-resistant layer 30b may be formed at one of outer edges of substrate 30a that is to form a curled part. In that case, the material of the heat-resistant layer 30b may be applied to only the one of the outer edges of the substrate 30a. Alternatively, the separator 30 may be formed in the following manner. As shown in FIGS. 5A and 5B, first, a heat-resistant layer 30b and a heat-resistant layer 30c are formed on an elongated substrate 30a. FIG. 5B is a cross-sectional view taken along the line VB-VB in FIG. 5A. Next, the substrate 30a is cut along a center line C of the substrate 30a in the width direction, to form two sheets, and each of the sheets is cut into a predetermined length. In this manner, a plurality of separators 30 are obtained.

After the wound body 100 has been formed, welding is performed. Specifically, as shown in FIG. 1, the exposed part 11x of the positive electrode current collector 11 is welded to the positive electrode current collector plate 14, and the exposed part 21x of the negative electrode current collector 21 is welded to the negative electrode current collector plate 24. Heat generated during welding heats the protruding part 30x. At the protruding part 30×, the heat-resistant layer 30b is formed only on the surface located toward the negative electrode 20 adjacent to the protruding part 30x. Accordingly, heat-shrinking the substrate 30a causes the protruding part 30x to be curled toward the positive electrode 10, to form a curled part 30xa. Note that, as stated above, after the welding step, the heating step of heating the protruding part 30× may be further performed; or the heating step of heating the protruding part 30× may be performed before the welding step. By performing the heating step separately from the welding step, the curled part 30xa is more likely to be formed uniformly.

Thereafter, the wound body 100 and the electrolyte are accommodated in the case 210, and the case 210 is sealed by the sealing plate 220 and the gasket 221. Note that the above-described connections via the tab lead 15 and the negative electrode current collector plate 24 are established when accommodating the wound body 100 in the case. In this manner, the battery 200 is obtained.

### (Embodiment 2)

In the following, examples of the power storage device (D2) and the manufacturing method (M2) according to the present disclosure will be described specifically with reference to the drawings. The above-described constituent elements can be applied to the constituent elements of the examples described below. The examples described below can be changed based on the above descriptions. The matters described below may be applied to the embodiment described above. In the examples described below, matters that are not essential to the power storage device (D2) and the manufacturing method (M2) may be omitted. The following describes examples in which the power storage device (D2) is a lithium ion secondary battery.

To facilitate viewing, illustrations of some of the constituent elements shall be omitted from the following drawings. In addition, to facilitate viewing, hatching may be omitted from the following drawings.

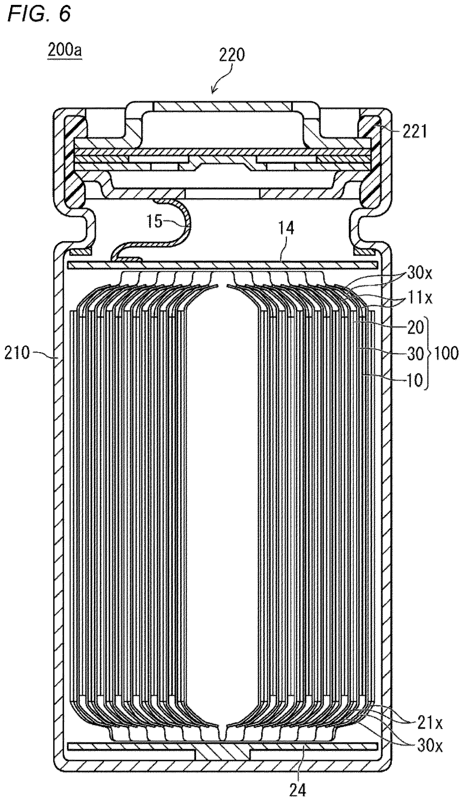

FIG. 6 is a vertical cross-sectional view schematically showing the configuration of a battery 200a of Embodiment 2. The battery 200a is an example of the power storage device (D2), and is a cylindrical lithium ion secondary battery. The battery 200a includes a columnar wound body (electrode group) 100, a non-aqueous electrolyte (not shown), a case 210, a sealing plate 220, and a gasket 221. The case 210, which is a bottomed metal case, accommodates the wound body 100 and the non-aqueous electrolyte. The sealing plate 220 seals an opening of the case 210. The battery 200a further includes a positive electrode current collector plate 14, a negative electrode current collector plate 24, and a tab lead 15.

The wound body 100 is formed by winding a band-shaped positive electrode 10 and a band-shaped negative electrode 20, with a band-shaped separator 30 interposed therebetween. The separator 30 is disposed between the positive electrode 10 and the negative electrode 20. A gasket 221 is disposed at a peripheral edge portion of the sealing plate 220. The interior of the case 210 is sealed by crimping an opening end portion of the case 210 onto the gasket 221.

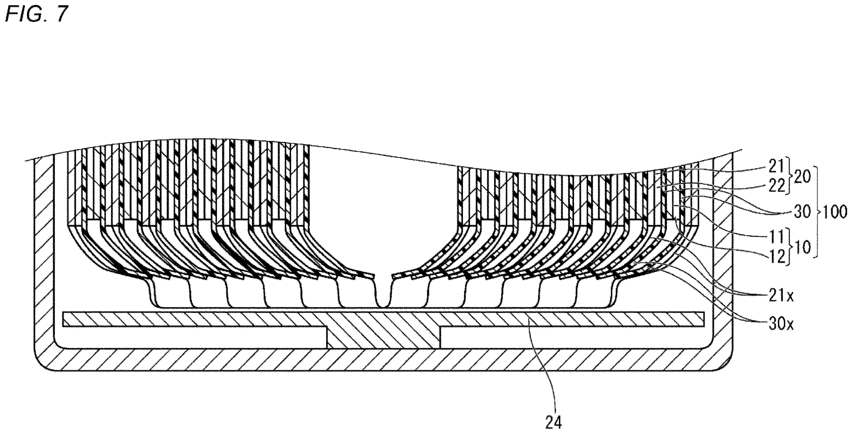

FIG. 7 shows an enlarged view of a portion of FIG. 6 (portion located on the negative electrode current collector plate 24 side). As shown in FIG. 7, the positive electrode 10 includes a positive electrode current collector 11, and positive electrode active material layers 12 formed on both surfaces of the positive electrode current collector 11. As shown in FIG. 6, the positive electrode current collector 11 includes an exposed part 11x on which the positive electrode active material layer 12 are not formed. The exposed part 11x on the positive electrode current collector plate 14 side is bent toward the center of the wound body 100 and welded to the positive electrode current collector plate 14. The tab lead 15 is connected to the positive electrode current collector plate 14 and the sealing plate 220. Consequently, the positive electrode 10 is electrically connected to the sealing plate 220, and the sealing plate 220 functions as an external positive electrode terminal.

The negative electrode 20 includes a negative electrode current collector 21, and negative electrode active material layers 22 formed on both surfaces of the negative electrode current collector 21. The negative electrode current collector 21 includes an exposed part 21x on which the negative electrode active material layer 22 is not formed. The exposed part 21x on the negative electrode current collector plate 24 side is bent toward the center of the wound body 100 and welded to the negative electrode current collector plate 24. The negative electrode current collector plate 24 is welded to an inner bottom surface of the case 210. Consequently, the negative electrode 20 is electrically connected to the case 210, and the case 210 functions as an external negative electrode terminal.

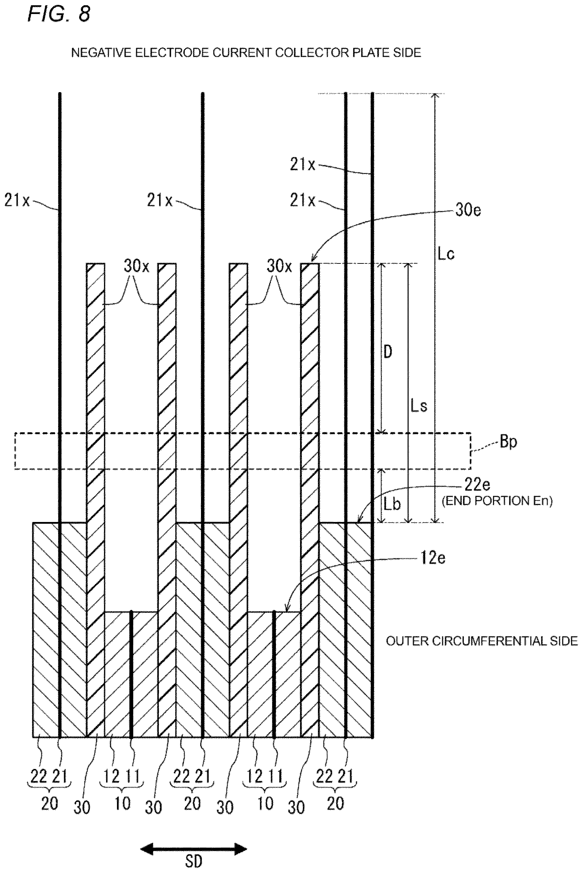

Note that in FIGS. 6 and 7, to facilitate viewing, a slight gap exists between the exposed part 11x and the positive electrode current collector plate 14, and between the exposed part 21x and the negative electrode current collector plate 24; however, these exposed parts and the corresponding current collector plates are welded and connected together. In addition, FIGS. 6 and 7 illustrate the exposed part 11x as being bent at different positions in the radial direction. This is to facilitate viewing of the drawings. Actually, the separator 30 is thin, and therefore the distance between a bent portion Bp and an end portion En shown in FIG. 8 can be substantially constant.

The separator 30 includes a protruding part 30x protruding beyond end portions of the positive electrode active material layers 12 and end portions of the negative electrode active material layers 22.

The positive electrode 10, the negative electrode 20, and the separator 30 are stacked in the radial direction of the wound body 100 serving as an electrode group. The exposed part 11x of the positive electrode current collector 11 can be regarded as including a plurality of exposed regions disposed along the stacking direction SD (radial direction, see FIG. 8) of the wound body 100. Similarly, the protruding part 30x can be regarded as including a plurality of protruding regions disposed along the stacking direction SD of the wound body 100. Also, two protruding regions (protruding part 30x) sandwiched between two adjacent exposed regions (exposed part 11x) are bent together with the two exposed regions. The two protruding regions sandwiched between the two exposed regions are in contact with each other. The contact between these protruding regions particularly suppresses metal fine particles from entering the space between the protruding regions.

In the example shown in FIGS. 6 and 7, the exposed part 21x of the negative electrode current collector 21 is present on the outermost circumference of the wound body 100. With this configuration, as shown in FIG. 7, by bending the exposed part 21x present on the outermost circumference, the protruding part 30x located inward of the exposed part 21x can be protected from spatters.

In Embodiment 2, on both the positive electrode current collector plate 14 side and the negative electrode current collector plate 24 side, the protruding parts 30x are bent together with the exposed parts of the current collectors. However, only the protruding part 30x on the positive electrode current collector plate 14 side may be bent together with the exposed part 11x of the positive electrode current collector 11, or only the protruding part 30x on the negative electrode current collector plate 24 side may be bent together with the exposed part 21x of the negative electrode current collector 21.

The protruding length Ls of the protruding part 30x will be described below, together with an example of the manufacturing method of the battery 200a. In the example of the manufacturing method of the battery 200a, first, the positive electrode 10, the negative electrode 20, and the separator 30 are prepared. These can be formed by the above-described methods.

FIG. 8 schematically shows a portion (portion in the vicinity of the negative electrode current collector plate 24) of the wound body 100 formed by the positive electrode 10, the negative electrode 20, and the separator 30. Note, however, that the wound body shown in FIG. 8 is the wound body before the exposed parts 11x and 21x are bent.

FIG. 8 shows the protruding length Ls of the protruding part 30x and an exposed length Lc of the exposed part 21x. The protruding length Ls is a length of the protruding part 30x when the protruding part 30x is flattened, and is a protruding length from an end portion En, which is one of an end portion 12e of each of the positive electrode active material layers 12 and an end portion 22e of each of the negative electrode active material layers 22, that is located on the outer side (outer side of the wound body 100 in the axial direction) in the electrode group (wound body 100). For the battery 200a of Embodiment 2, the negative electrode 20 is larger than the positive electrode 10. Therefore, the end portion En of the battery 200a is the end portion 22e of each negative electrode active material layer 22.

The exposed length Lc is a protruding length of the exposed part 21x when the exposed part 21x is flattened, and is a protruding length from the end portion En, which is one of the end portion 12e of each positive electrode active material layer 12 and the end portion 22e of the negative electrode active material layers 22, that is located on the outer side of the electrode group (the wound body 100). Note that on the positive electrode current collector plate 14 side, the exposed part 11x is bent, and therefore the exposed length Lc of the exposed part 11×, instead of the exposed length Lc of the exposed part 21x, is set to have a predetermined length. The exposed length Lc in that case is a protruding length of the exposed part 11x when the exposed part 11x is flattened, and is a protruding length from the end portion En, which is one of the end portion 12e of each of the positive electrode active material layers 12 and the end portion 22e of each of the negative electrode active material layers 22, that is located on the outer side of the electrode group (wound body 100).

When the negative electrode current collector 21 is welded to the negative electrode current collector plate 24, welding can be performed in the following manner. First, while the exposed regions (exposed part 21x) stacked in the radial direction (stacking direction SD) sandwich the protruding part 3 0x present therebetween, the exposed regions are bent toward the central axis of the wound body 100. FIG. 8 shows an example of the position of the bent portion Bp at which the exposed regions are bent at this time. The bent portion Bp is at a position closer to the active material layers than the end portion 30e of the protruding part 30x is. Note that the bent portion Bp may be between the end portion 30e of the protruding part 30x and the end portion En, which is one of the end portion 12e of each of the positive electrode active material layers 12 and the end portion 22e of each of the negative electrode active material layers 22, that is located on the outer side of the electrode group (wound body 100).

The protruding length Ls may be 3 mm or more, 4 mm or more, or 5 mm or more. The upper limit of the protruding length Ls is not particularly limited and may be 10 mm or less, 8 mm or less, 6 mm or less, or 5 mm or less. For example, the protruding length Ls may be in the range from 3 to 10 mm, in the range from 3 to 8 mm, in the range from 3 to 6 mm, or in the range from 3 to 5 mm. The lower limit of each of these ranges may be replaced by 4 mm or 5 mm, as long as the lower limit is not equal to or not greater than the upper limit. Note that the protruding length Ls of the power storage device (D2) according to the present disclosure is larger than the protruding length Ls of a known typical power storage device.

The exposed length Lc is larger than the protruding length Ls. The difference (Lc-Ls) between the exposed length Lc and the protruding length Ls may be 1 mm or more, 2 mm or more, 3 mm or more, or 4 mm or more. The upper limit of the difference (Lc-Ls) is not particularly limited and may be 10 mm or less, 8 mm or less, 6 mm or less, or 4 mm or less. The difference

(Lc-Ls) may be in the range from 1 to 10 mm, in the range from 1 to 8 mm, in the range from 1 to 6 mm, or in the range from 1 to 4 mm. The lower limit of each of these ranges may be replaced by 2 mm, 3 mm, or 4 mm, as long as the lower limit is not equal to or not greater than the upper limit.

As stated above, the bent portion Bp may be between the end portion En described above and the end portion 30e of the protruding part 3 0x. Note that, as shown in FIG. 8, the position of the bent portion Bp may vary to a certain degree. That is, the position of the bent portion Bp may differ depending on the positions of the exposed part.

The shortest distance Lb from the end portion En to the bent portion Bp is smaller than the protruding length Ls. The shortest distance D between the end portion 22e and the bent portion Bp may be 0.5 mm or more, 1.0 mm or more, or 2.0 mm or more. The upper limit of the shortest distance D is not particularly limited and may be 6.0 mm or less, 4.0 mm or less, or 3.0 mm or less. The larger the shortest distance D, the more likely metal fine particles are to be suppressed from entering the interior of the electrode group.

Although FIG. 8 shows an example of the arrangement on the negative electrode current collector plate 24 side, the exposed length Lc, the protruding length Ls, the shortest distance Lb, and the difference D in the arrangement on the positive electrode current collector plate 14 side may also be in the same ranges as those on the negative electrode current collector plate 24 side.

After the wound body 100 has been formed, welding is performed. Specifically, as shown in FIG. 6, the exposed part 11x of the positive electrode current collector 11 is welded to the positive electrode current collector plate 14, and the exposed part 21x of the negative electrode current collector 21 is welded to the negative electrode current collector plate 24. The exposed part 11x is bent toward the central axis of the wound body 100 before welding the exposed part 11x, and the exposed part 21x is bent toward the central axis of the wound body 100 before welding the exposed part 21x. At the time of bending the exposed parts 11x and 21x, the protruding parts 30x of the separator 30 located between the exposed parts 11x and 21x are bent together.

Thereafter, the wound body 100 and the electrolyte are accommodated in the case 210, and the case 210 is sealed by the sealing plate 220 and the gasket 221. Note that the above-described connections via the tab lead 15 and the negative electrode current collector plate 24 are established when accommodating the wound body 100 in the case. In this manner, the battery 200a is obtained.

### [Industrial Applicability]

The present disclosure is applicable to a power storage device.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

10: Positive electrode
11: Positive electrode current collector
11x, 21x: Exposed part
12: Positive electrode active material layer
14: Positive electrode current collector plate
20: Negative electrode
21: Negative electrode current collector
22: Negative electrode active material layer
24: Negative electrode current collector plate
30: Separator
30a: Substrate
30b, 30c: Heat-resistant layer
30sn: Negative-electrode-side surface
30sp: Positive-electrode-side surface
30x: Protruding part
30xa: Curled part (deformation part)
100: Wound body
200, 200a: Battery (power storage device)

## Claims

1. A power storage device, comprising an electrode group including a positive electrode, a negative electrode, and a separator, wherein
the positive electrode, the negative electrode, and the separator of the electrode group are stacked in a stacking direction, with the separator disposed between the positive electrode and the negative electrode,
the positive electrode includes a positive electrode current collector, and a positive electrode active material layer disposed on the positive electrode current collector,
the negative electrode includes a negative electrode current collector, and a negative electrode active material layer disposed on the negative electrode current collector,
the separator includes a protruding part protruding from a region in which the positive electrode active material layer and the negative electrode active material layer are opposed to each other, and
at least a portion of the protruding part is bent.

2. The power storage device according to claim 1, wherein
the separator includes a positive-electrode-side surface located toward the positive electrode adjacent to the separator, and a negative-electrode-side surface located toward the negative electrode adj acent to the separator, and
the at least a portion of the protruding part includes, at an end portion of the protruding part, a curled part that is curled.

3. The power storage device according to claim 2, wherein the curled part is curled toward the positive electrode adjacent to the protruding part.

4. The power storage device according to claim 2 or 3, further comprising
a negative electrode current collector plate, wherein
the negative electrode current collector is welded to the negative electrode current collector plate, and
the separator includes, on the negative electrode current collector plate side, the protruding part including the curled part.

5. The power storage device according to any one of claims 2 to 4, wherein
the separator includes a first separator and a second separator disposed so as to sandwich the positive electrode therebetween,
the curled part includes a first curled part of the first separator, and a second curled part of the second separator, and
the first curled part and the second curled part are curled so as to approach each other.

6. The power storage device according to claim 5, wherein,
the first curled part and the second curled part are located at different positions in a direction perpendicular to the stacking direction, and
the first curled part and the second curled part overlap each other, as viewed from the direction perpendicular to the stacking direction.

7. The power storage device according to any one of claims 2 to 6, wherein,
at the curled part, the negative-electrode-side surface has heat resistance higher than heat resistance of the positive-electrode-side surface, and
the curled part is curled toward the positive electrode to which the curled part is adjacent.

8. The power storage device according to claim 1, wherein
the separator includes a positive-electrode-side surface located toward the positive electrode adjacent to the separator, and a negative-electrode-side surface located toward the negative electrode adj acent to the separator,
the at least a portion of the protruding part includes a deformation part in which a first heat-resistant layer is formed on only one of the positive-electrode-side surface and the negative-electrode-side surface, and
the deformation part is bent with the first heat-resistant layer facing outside.

9. The power storage device according to claim 8, wherein no heat-resistant layer is formed on a portion of the one of the positive-electrode-side surface and the negative-electrode-side surface, the portion being sandwiched between the positive electrode and the negative electrode.

10. The power storage device according to claim 8 or 9, wherein
the protruding part protrudes beyond one of the positive electrode and the negative electrode in the direction perpendicular to the stacking direction, and
the deformation part is located on an outer side of the electrode group than the one of the positive electrode and the negative electrode.

11. The power storage device according to claim 1, further comprising
at least one current collector plate, wherein
the positive electrode current collector includes a first exposed part on which the positive electrode active material layer is not formed,
the negative electrode current collector includes a second exposed part on which the negative electrode active material layer is not formed,
at least one selected from the group consisting of the first exposed part and the second exposed part is welded in a bent state to the at least one current collector plate, and
the at least a portion of the protruding part is bent together with the at least one exposed part.

12. The power storage device according to claim 11, wherein
the at least one exposed part includes a plurality of exposed regions disposed along the stacking direction,
the at least a portion of the protruding part includes a plurality of protruding regions disposed along the stacking direction, and
two of the protruding regions that are sandwiched between two of the exposed regions that are adjacent to each other are bent together with the two exposed regions.

13. The power storage device according to claim 11 or 12, wherein
the at least one current collector plate includes a negative electrode current collector plate, and
the at least one exposed part includes the second exposed part.

14. The power storage device according to claim 13, wherein, of the protruding part, the whole of the protruding part present on the negative electrode current collector plate side is bent together with the second exposed part.

15. A manufacturing method of a power storage device including an electrode group including a positive electrode, a negative electrode, and a separator, the manufacturing method comprising the steps of
(i) forming the electrode group by stacking the positive electrode, the negative electrode, and the separator, with the separator disposed between the positive electrode and the negative electrode; and
(ii) heating at least a portion of the electrode group, wherein
the positive electrode includes a positive electrode current collector, and a positive electrode active material layer disposed on the positive electrode current collector,
the negative electrode includes a negative electrode current collector, and a negative electrode active material layer disposed on the negative electrode current collector,
in the step (i), the electrode group is formed so that a portion of the separator becomes a protruding part protruding from a region in which the positive electrode active material layer and the negative electrode active material layer are opposed to each other,
the separator includes a positive-electrode-side surface located toward the positive electrode adjacent to the separator, and a negative-electrode-side surface located toward the negative electrode adjacent to the separator,
the separator includes a substrate, and a first heat-resistant layer formed on a surface of the protruding part, and,
in the step (ii), at least a portion of the protruding part is heated to curl the at least a portion of the protruding part.

16. The manufacturing method according to claim 15, wherein
the first heat-resistant layer is formed on the negative-electrode-side surface of the protruding part, and,
in the step (ii), the at least a portion of the protruding part is curled toward the positive electrode adjacent to the protruding part.

17. The manufacturing method according to claim 15 or 16, further comprising, after the step (i), a welding step of welding the negative electrode current collector to a negative electrode current collector plate.

18. The manufacturing method according to claim 17, wherein the step (ii) is performed using heat generated during the welding step.
